# EUROPÄISCHE PATENTSCHRIFT

(11) **EP 3 263 399 B1**
(45) Veröffentlichungstag und Bekanntmachung des Hinweises auf die Patenterteilung: **31.10.2018**
(21) Anmeldenummer: 16177359.3
(22) Anmeldetag: 30.06.2016
(51) Int. Cl.: B60N 2/56, B60N 2/02

(54) **VERFAHREN UND VORRICHTUNG ZUM STEUERN DER KLIMATISIERUNG EINES FAHRZEUGSITZES**
METHOD AND DEVICE FOR CONTROLLING THE AIR CONDITIONING OF A VEHICLE SEAT
PROCEDE ET DISPOSITIF DE COMMANDE DE LA CLIMATISATION D'UN SIEGE DE VEHICULE

(43) Veröffentlichungstag der Anmeldung: 03.01.2018
(73) Patentinhaber: Volkswagen Aktiengesellschaft, 38440 Wolfsburg (DE)
(72) Erfinder: Cengil, Sükrü, 30938 Burgwedel (DE); Schnurr, Andrea, 38368 Mariental (DE); Belun, Marina, 30625 Hannover (DE); Herdey, Jan Peter, 38110 Braunschweig (DE); Wolf, Oliver, 38442 Wolfsburg (DE)
(74) Vertreter: Reitstötter Kinzebach

(56) Entgegenhaltungen:
- DE-A1-102009 056 675
- DE-A1-102011 110 579

## Beschreibung

Die vorliegende Erfindung betrifft ein Verfahren zum Steuern der Klimatisierung eines Fahrzeugsitzes. Ferner betrifft die Erfindung eine Vorrichtung zum Steuern der Klimatisierung eines Fahrzeugsitzes mit einer Klimatisierungseinrichtung, mit der ein Wert eines Klimatisierungsparameters einstellbar ist.

In modernen Fahrzeugen, insbesondere in Kraftfahrzeugen, ist eine Vielzahl von Einrichtungen vorgesehen, die elektronisch bedient werden können. Vielfach erfolgt daher die Bedienung nicht mehr über mechanische Bedienelemente, sondern über eine Benutzerschnittstelle, die eine Anzeigefläche und eine zugeordnete Eingabeeinrichtung, wie z. B. eine berührungsempfindliche Oberfläche, umfasst. Da bei derartigen Bediensystemen nicht mehr der unmittelbare Bezug zwischen einem Bedienelement und der zu bedienenden Vorrichtung besteht, ergibt sich die Herausforderung, dass das Bedienkonzept und die in Verbindung mit der Bedienung angezeigte Information für den Nutzer einfach, intuitiv und schnell verständlich sein sollte.

Es ist bekannt, einen Fahrzeugsitz mit einer Sitzheizung auszustatten, mit welcher die Oberfläche des Fahrzeugsitzes in verschiedenen Bereichen erwärmt werden kann. Der Klimatisierungsparameter ist in diesem Fall die Sitzheizung, deren Heizleistung mittels eines Bedienelements eingestellt werden kann. Des Weiteren sind Sitzlüftungen bekannt, durch welche der Sitz von innen nach außen belüftet werden kann. Es hat sich jedoch herausgestellt, dass bei bekannten Klimatisierungen für einen Fahrzeugsitz die Steuerungsmöglichkeiten für den Nutzer verbesserungswürdig sind. Insbesondere sollen die Klimatisierungsparameter besser an die Bedürfnisse des Nutzers angepasst werden können.

Die DE 10 2011 110579 A1 zeigt ein Verfahren und eine Vorrichtung zum Steuern der Klimatisierung eines Fahrzeugsitzes, bei dem die Heizleistung für die Rückenlehne und für das Sitzkissen getrennt voneinander mittels zweier separater Schiebeschalter gesteuert werden kann. Der vorliegenden Erfindung liegt daher die Aufgabe zugrunde, ein Verfahren und eine Vorrichtung der eingangs genannten Art bereitzustellen, mit denen eine Steuerung mit einer verbesserten Anpassung der Klimatisierung des Fahrzeugsitzes möglich ist.

Erfindungsgemäß wird diese Aufgabe durch ein Verfahren mit den Merkmalen des Anspruchs 1 und eine Vorrichtung mit den Merkmalen des Anspruchs 13 gelöst.

Bei dem erfindungsgemäßen Verfahren wird ein Wert eines Klimatisierungsparameters mittels eines Bedienelements eingestellt. Dabei ist das Bedienelement von einer Nullstellung in zwei entgegengesetzte Richtungen bewegbar. Der Klimatisierungsparameter steuert die Verteilung einer Klimatisierungsfunktion in separaten Bereichen entlang einer durch die Geometrie des Fahrzeugsitzes ausgezeichneten ersten Richtung. In einer Nullstellung des Bedienelements wird eine Gleichverteilung der Klimatisierungsfunktion in den Bereichen erzeugt. Bei einem Bewegen des Bedienelements in einer zweiten Richtung bleibt der Wert des Klimatisierungsparameters für zumindest einen ersten Bereich konstant und für zumindest einen zweiten Bereich wird er verringert. Bei einem Bewegen des Bedienelements in einer dritten, zur zweiten Richtung entgegengesetzten Richtung bleibt hingegen der Wert des Klimatisierungsparameters für zumindest den zweiten Bereich konstant und wird für zumindest den ersten Bereich verringert.

Durch das erfindungsgemäße Verfahren wird somit eine speziell an die Klimatisierung eines Fahrzeugsitzes angepasste Balancefunktion bereitgestellt. Dabei kann mittels des Bedienelements eine speziell an die Bedürfnisse der Klimatisierung eines Fahrzeugsitzes angepasste Veränderung in den beiden Bereichen des Fahrzeugsitzes erzeugt werden. Vorteilhafterweise wird hierdurch eine genauere Steuerung der Klimatisierung des Fahrzeugsitzes bereitgestellt.

Die entgegengesetzten Richtungen des Bedienelements können zwei entgegengesetzte Richtungen auf einer Geraden sein. Es können jedoch auch entgegengesetzte Richtungen auf beliebig gekrümmten Linien sein. Beispielsweise können die zwei entgegengesetzten Richtungen entgegengesetzte Drehrichtungen sein.

Die erste Richtung, die durch die Geometrie des Fahrzeugsitzes ausgezeichnet ist, kann beispielsweise eine Längsrichtung oder eine Querrichtung des Fahrzeugsitzes sein. Die Längsrichtung erstreckt sich dabei insbesondere von der oberen Kante der Rückenlehne nach unten bis zum Übergang zur Sitzfläche des Fahrzeugsitzes und von dort nach vorne bis zur vorderen Kante der Sitzfläche bzw. in umgekehrter Richtung. Bei dem erfindungsgemäßen Verfahren wird der Klimatisierungsparameter in dieser Richtung verändert, wobei zumindest zwei separate Bereiche gebildet sind. Der erste Bereich kann dabei beispielsweise innerhalb der Rückenfläche und der zweite Bereich innerhalb der Sitzfläche des Fahrzeugsitzes liegen.

Gemäß einer Ausgestaltung des erfindungsgemäßen Verfahrens wird der Wert des Klimatisierungsparameters für den zweiten Bereich umso mehr verringert, desto größer die Bewegung oder der Abstand des Bedienelements von der Nullstellung in die zweite Richtung ist. Gleichermaßen kann der Wert des Klimatisierungsparameters für den ersten Bereich umso mehr verringert werden, desto größer die Bewegung oder der Abstand des Bedienelements von der Nullstellung in die dritte Richtung ist. Bei der Bewegung des Bedienelements in einer Richtung bleibt somit der Wert des Klimatisierungsparameters in einem Bereich konstant. In dem anderen Bereich wird er hingegen sukzessive verringert, je weiter das Bedienelement von der Nullstellung weg bewegt wird. Auf diese Weise wird eine speziell an die Klimatisierung eines Fahrzeugsitzes angepasste, intuitiv bedienbare und genaue Steuerung der Klimatisierung bereitgestellt.

Das Bedienelement umfasst insbesondere ein Schiebeelement. Beispielsweise kann das Schiebeelement ein Schaltelement sein, welches auf einer Anzeigefläche angezeigt wird. In diesem Fall ist insbesondere eine Markierung vorgesehen, welche durch eine geeignete Eingabevorrichtung vom Nutzer auf einer Skala verschoben werden kann. Durch diese Ausgestaltung des Bedienelements kann die Steuerung der Klimatisierung des Fahrzeugsitzes kostengünstig und einfach in ein vorhandenes Bediensystem integriert werden, welches eine Anzeigefläche zum Anzeigen von Bedienelementen als Schaltelemente umfasst.

Gemäß einer weiteren Ausgestaltung des erfindungsgemäßen Verfahrens wird ein Graphikelement des zu klimatisierenden Fahrzeugsitzes auf der Anzeigefläche angezeigt. Das Schaltelement ist in diesem Fall so auf der Anzeigefläche angeordnet, dass ein Verschieben des von dem Schaltelement dargestellten Schiebeelements in die zweite Richtung eine Zuordnung zu der von dem Graphikelement dargestellten Rückenfläche des Fahrzeugsitzes darstellt. Gleichermaßen stellt ein Verschieben des von dem Schaltelement dargestellten Schiebeelements in die dritte Richtung eine Zuordnung zu der von dem Graphikelement dargestellten Sitzfläche des Fahrzeugsitzes dar. Vorteilhafterweise kann der Nutzer durch das Schaltelement und das zugehörige Graphikelement für den zu klimatisierenden Fahrzeugsitz besonders einfach nachvollziehen, wie eine Betätigung des Schaltelements die Klimatisierung des Fahrzeugsitzes verändert.

Bei einem Verschieben des Schaltelements in die zweite Richtung bleibt insbesondere der Wert der Klimatisierung für die Rückenfläche des Fahrzeugsitzes konstant. Der Wert der Klimatisierung für die Sitzfläche wird hingegen verringert. Wenn umgekehrt das Schaltelement in die dritte Richtung verschoben wird, bleibt insbesondere der Wert der Klimatisierung für die Sitzfläche konstant und der Wert für die Klimatisierung der Rückenfläche wird verringert.

Gemäß einer weiteren Ausgestaltung des erfindungsgemäßen Verfahrens wird der Wert eines weiteren Klimatisierungsparameters durch ein weiteres Bedienelement gesteuert, wobei der weitere Klimatisierungsparameter die Verteilung der weiteren Klimatisierungsfunktion in den separaten Bereichen entlang der ersten Richtung steuert. Auch in diesem Fall wird in einer Nullstellung des weiteren Bedienelement eine Gleichverteilung der weiteren Klimatisierungsfunktion in den Bereichen erzeugt. Bei einem Bewegen des weiteren Bedienelements in der zweiten Richtung bleibt der Wert des weiteren Klimatisierungsparameters für zumindest den ersten Bereich konstant und für zumindest den zweiten Bereich wird er verringert. Bei einem Bewegen des weiteren Bedienelements in der dritten Richtung bleibt der Wert des weiteren Klimatisierungsparameters für zumindest den zweiten Bereich konstant und er verringert sich für zumindest den ersten Bereich. Durch die Steuerung eines Wertes eines weiteren Klimatisierungsparameters kann die Klimatisierung des Fahrzeugsitzes vorteilhafterweise noch genauer und nutzerfreundlicher eingestellt werden.

Gemäß einer Ausgestaltung des erfindungsgemäßen Verfahrens wird der Wert des Klimatisierungsparameters und/oder des weiteren Klimatisierungsparameters für die Bereiche mittels des Graphikelements des zu klimatisierenden Sitzes dargestellt. Beispielsweise kann der Wert oder es können die Werte durch eine farbige Darstellung visualisiert werden. Beispielsweise kann der Wert des Klimatisierungsparameters durch eine erste Farbe dargestellt werden und der Wert des weiteren Klimatisierungsparameters durch eine zweite Farbe dargestellt werden. Die Größe des Wertes kann dabei auch durch eine Veränderung der Farbe visualisiert werden. Ferner kann dieser Wert durch die Farbsättigung dargestellt werden. Vorteilhafterweise ist es bei dem erfindungsgemäßen Verfahren möglich, sowohl den Wert des Klimatisierungsparameters als auch den Wert des weiteren Klimatisierungsparameters in einem einzigen Graphikelement für den Fahrzeugsitz für den Nutzer zu veranschaulichen. Die zur Steuerung der beiden Klimatisierungsparameter vorgesehenen Bedienelemente sind dabei separat auf der Anzeigefläche als Schaltelemente dargestellt. Sie werden jedoch mit der gleichen Bedienlogik bedient. Vorteilhafterweise wird hierdurch die Bedienung der Steuerung der Klimatisierung des Fahrzeugsitzes vereinfacht.

Bei dem Klimatisierungsparameter handelt es sich beispielsweise um eine Sitzlüftung, mittels welcher verschiedene Bereiche des Fahrzeugsitzes gelüftet werden. Der Wert der Sitzlüftung wird dabei von dem Graphikelement durch eine Umhüllung bei dem Graphikelement des dargestellten Fahrzeugsitzes wiedergegeben. Vorteilhafterweise können hierdurch gleichzeitig Werte für die Steuerung der Sitzheizung sowie der Sitzlüftung in einem einzigen Graphikelement dargestellt werden.

Bei dem weiteren Klimatisierungsparameter kann es sich insbesondere um eine Sitzheizung handeln, mittels welcher verschiedene Bereiche des Fahrzeugsitzes erwärmt werden. Es ist insbesondere ein erster Bereich innerhalb der Rückenfläche und ein zweiter Bereich innerhalb der Sitzfläche angeordnet. Der Wert der Sitzheizung, beispielsweise der Wert für die Heizleistung der Sitzheizung, wird von dem Graphikelement beispielsweise durch Heizdrähte in dem von dem Graphikelement dargestellten Fahrzeugsitz wiedergegeben. In Abhängigkeit von der Heizleistung der Sitzheizung in dem jeweiligen Bereich können diese Heizdrähte beispielsweise glühende erscheinen, wobei der Wert für die Heizleistung durch die Intensität des Glühens dargestellt wird.

Bei dem erfindungsgemäßen Verfahren wird als Eingabeeinrichtung vorteilhafterweise eine Anzeigefläche mit einer berührungsempfindlichen Oberfläche, d. h. ein sogenannte Touchscreen, verwendet. Auf diese Weise lässt sich die Bedienung des Klimatisierungsparameters oder der Klimatisierungsparameter in ein allgemeines Bedienkonzept, welches die Anzeigefläche mit der berührungsempfindlichen Oberfläche nutzt, integrieren. Vorteilhafterweise sind somit keine weiteren mechanischen oder elektrischen Bedienelemente erforderlich. Auf diese Weise lässt sich das erfindungsgemäße Verfahren sehr kostengünstig umsetzen. Außerdem kann Bauraum im Innenraum des Fahrzeugs durch den Einsatz des erfindungsgemäßen Verfahrens gespart werden.

Eine Betätigung bedeutet in diesem Fall insbesondere, dass ein Betätigungsobjekt die berührungsempfindliche Oberfläche bei dem Schaltelement berührt. Die Betätigung wird dann beendet, wenn das Betätigungsobjekt das Schaltelement nicht mehr berührt. Die Hin- und HerBewegung des Graphikelements für das Sitzelement veranschaulicht in diesem Fall die Freiheitsgrade der Bewegung für dieses Sitzelement. Hierdurch werden dem Nutzer vorteilhafterweise die Bewegungsmöglichkeiten des Sitzelements veranschaulicht.

Bei dem Betätigungsobjekt, welches bei dem erfindungsgemäßen Verfahren verwendet wird, kann es sich beispielsweise um die Fingerspitze eines Nutzers, einen Betätigungsstift oder irgendein anderes Objekt handeln.

Unter einem *Schaltelement* wird im Sinne der Erfindung ein Steuerelement einer graphischen Benutzerschnittstelle verstanden. Ein Schaltelement unterscheidet sich von Elementen und Flächen zur reinen Informationsanzeige, so genannten Anzeigeelementen, darin, dass sie auswählbar sind. Bei einer Auswahl eines Schaltelements wird eine ihr zugeordnete Funktion ausgeführt. Die Funktion kann nur zu einer Veränderung der Informationsanzeige führen. Ferner können über die Schaltelemente Einrichtungen gesteuert werden, deren Bedienung von der Informationsanzeige unterstützt wird. Die Schaltelemente können somit herkömmliche mechanische Schalter ersetzen. Die Schaltelemente können beliebig für eine frei programmierbaren Anzeigefläche erzeugt und von dieser angezeigt werden. Des Weiteren kann vorgesehen sein, dass ein Schaltelement markiert werden kann. In diesem Fall wird die zugeordnete Funktion noch nicht ausgeführt. Das markierte Schaltelement wird jedoch gegenüber anderen Schaltelementen hervorgehoben dargestellt. Erst bei einer Auswahl des Schaltelements wird die ihr zugeordnete Funktion ausgeführt.

Gemäß einer weiteren Ausgestaltung des erfindungsgemäßen Verfahrens wird eine Annäherung eines Betätigungsobjekts an eine berührungsempfindliche Oberfläche einer Eingabeeinrichtung erfasst und, wenn die Annäherung des Betätigungsobjekts an die berührungsempfindliche Oberfläche erfasst wurde, werden betätigbare Schaltelemente hervorgehoben dargestellt. Die Schaltelemente können insbesondere dadurch hervorgehoben dargestellt werden, dass Umrisslinien zu den entsprechenden Schaltelementen dargestellt werden. Des Weiteren können die Schaltelemente in einer anderen Helligkeit oder einem anderen Kontrast dargestellt werden. Der Nutzer kann auf diese Weise nur durch die Annäherung eines Betätigungsobjekts, wie beispielsweise seiner Fingerspitze, an die berührungsempfindliche Oberfläche erfahren, welche Parameter mittels der berührungsempfindlichen Oberfläche verstellt werden können.

Die erfindungsgemäße Vorrichtung zum Steuern der Klimatisierung eines Fahrzeugsitzes umfasst eine Klimatisierungseinrichtung, mit der ein Wert eines Klimatisierungsparameters einstellbar ist, wobei der Klimatisierungsparameter die Verteilung einer Klimatisierungsfunktion in separaten Bereichen entlang einer durch die Geometrie des Fahrzeugsitzes ausgezeichneten ersten Richtung steuert. Des Weiteren umfasst die Vorrichtung ein Bedienelement, welches von einer Nullstellung in zwei entgegengesetzte Richtungen bewegbar ist. Schließlich umfasst die Vorrichtung eine Steuereinrichtung, die mit der Klimatisierungseinrichtung und dem Bedienelement gekoppelt ist und die so eingerichtet ist, dass in der Nullstellung des Bedienelements eine Gleichverteilung der Klimatisierungsfunktion in den Bereichen erzeugt wird, bei einem Bewegen des Bedienelements in einer zweiten Richtung der Wert des Klimatisierungsparameters für zumindest einen ersten Bereich konstant bleibt und für zumindest einen zweiten Bereich verringert wird und bei einem Bewegen des Bedienelements in einer dritten, zur zweiten Richtung entgegengesetzten Richtung der Wert des Klimatisierungsparameters für zumindest den zweiten Bereich konstant bleibt und für zumindest den ersten Bereich verringert wird.

Die erfindungsgemäße Vorrichtung ist insbesondere eingerichtet, das erfindungsgemäße Verfahren vollständig oder teilweise auszuführen. Sie weist somit dieselben Vorteile wie das erfindungsgemäße Verfahren auf.

Gemäß einer Ausgestaltung der erfindungsgemäßen Vorrichtung befindet sich der von der Klimatisierungseinrichtung klimatisierte erste Bereich innerhalb einer Rückenfläche des Fahrzeugsitzes und der von der Klimatisierungseinrichtung klimatisierte zweite Bereich innerhalb einer Sitzfläche des Fahrzeugsitzes. Bei der Klimatisierungseinrichtung handelt es sich insbesondere um eine Sitzheizung und/oder eine Sitzlüftung. Wie vorstehend mit Bezug zu dem erfindungsgemäßen Verfahren erläutert, kann mittels der Vorrichtung sowohl der Wert der Sitzheizung und der Wert der Sitzlüftung gesteuert werden. Hierfür werden insbesondere als Bedienelemente Schaltelemente mit jeweils einem Schiebeelement auf einer Anzeigefläche angezeigt.

Gemäß einer Weiterbildung der erfindungsgemäßen Vorrichtung weist diese eine berührungsempfindliche Oberfläche zum Betätigen der Schaltelemente auf. Des Weiteren kann die Vorrichtung eine Annäherungserfassungsvorrichtung umfassen, mit welcher die Annäherung eines Betätigungsobjekts an die berührungsempfindliche Oberfläche erfassbar ist. Die berührungsempfindliche Oberfläche ist insbesondere auf der Anzeigefläche ausgebildet, so dass ein Touchscreen bereitgestellt wird. Auf diese Weise kann die Verstellung der Klimatisierungseinrichtung und ggf. einer weiteren Klimatisierungseinrichtung über eine zentrale Bedieneinrichtung erfolgen, die auch für andere Funktionen des Fahrzeugs eingesetzt wird. Die Vorrichtung zum Steuern der Klimatisierung eines Fahrzeugsitzes kann in das Bedienkonzept integriert werden. Gesonderte mechanische oder elektrische Schalter sind nicht erforderlich, so dass die Vorrichtung sehr kostengünstig und bauraumsparend in ein Fahrzeug integriert werden kann.

Die Erfindung wird nun anhand eines Ausführungsbeispiels mit Bezug zu den Zeichnungen erläutert.
Figur 1 zeigt schematisch ein Ausführungsbeispiel der erfindungsgemäßen Vorrichtung und
Figur 2 zeigt eine von einem Ausführungsbeispiel des erfindungsgemäßen Verfahrens erzeugte Anzeige auf einer Anzeigefläche.

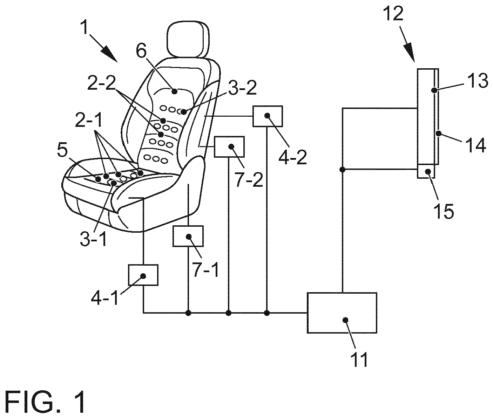

Zunächst wird mit Bezug zu Figur 1 der Aufbau des Ausführungsbeispiels der erfindungsgemäßen Vorrichtung erläutert:
In einem Fahrzeug ist ein Fahrzeugsitz 1 angeordnet. Dieser umfasst als erste Klimatisierungseinrichtung eine Sitzheizung. Die erste Klimatisierungseinrichtung umfasst hierfür eine Heizeinrichtung 2-1, die in die Sitzfläche 5 integriert sind, und eine Heizeinrichtung 2-2, die in die Rückenfläche 6 integriert sind. Des Weiteren umfasst die erste Klimatisierungseinrichtung eine erste Steuereinheit 4-1 für die Heizeinrichtung 2-1 in der Sitzfläche 5 und eine zweite Steuereinheit 4-2 für die Heizeinrichtung 2-2 in der Rückenfläche 6.

Als zweite Klimatisierungseinrichtung ist für den Fahrzeugsitz 1 eine Sitzlüftung vorgesehen. Die zweite Klimatisierungseinrichtung umfasst Lüftungsöffnungen 3-1 und 3-2 in der Sitzfläche 5 und der Rückenfläche 6, welchen klimatisierte Luft über die Lüftungseinheiten 7-1 und 7-2 zugeführt werden können.

Die Steuereinheiten 4-1, 4-2 und die Lüftungseinheiten 7-1, 7-2 sind mit einer Steuereinrichtung 11 gekoppelt, mittels welcher die Heizleistung der Heizeinrichtungen 2-1 und 2-2 sowie die über die Lüftungsöffnungen 3-1 und 3-2 aus dem Fahrzeugsitz 1 austretende Luft hinsichtlich ihrer Geschwindigkeit und Temperatur gesteuert werden kann.

Der Fahrzeugsitz 1 zeichnet eine erste Richtung aus, nämlich eine Längsrichtung. Sie beginnt bei der vorderen Kante der Sitzfläche 5 und erstreckt sich dann nach hinten bis zur hinteren Kante der Sitzfläche 5. Dort geht sie von der unteren Kante der Rückenfläche 6 nach oben bis zur oberen Kante der Rückenfläche 6 über.

In dem Fahrzeugsitz 1 sind zwei separate Bereiche ausgebildet. Der erste Bereich befindet sich innerhalb der Rückenfläche 6 und der zweite Bereich befindet sich innerhalb der Sitzfläche 5.

Diese beiden Bereiche 5 und 6 können mittels der ersten und zweiten Klimatisierungseinrichtung getrennt voneinander klimatisiert werden. Die beiden Bereiche 5, 6 erstrecken sich entlang der Längsrichtung des Fahrzeugsitzes 1.

Die Steuereinrichtung 11 ist des Weiteren mit einer Anzeigevorrichtung 12 datentechnisch gekoppelt. Die Steuervorrichtung 11 umfasst eine Anzeigefläche 13, auf welcher eine berührungsempfindliche Oberfläche 14 ausgebildet ist. Es wird somit ein so genannter Touchscreen bereitgestellt.

Bei der Anzeigevorrichtung 12 ist des Weiteren eine Annäherungserfassungseinrichtung 15 angeordnet. Mittels der Annäherungserfassungseinrichtung 15 kann die Annäherung eines Betätigungsobjekts an die berührungsempfindliche Oberfläche 14 erfasst werden. Bei dem Betätigungsobjekt kann es sich insbesondere um die Fingerspitze eines Nutzers handeln. Derartige Annäherungserfassungseinrichtungen 15 sind an sich bekannt. Die Annäherungserfassungseinrichtung 15 ist auch mit der Steuereinrichtung 11 datentechnisch gekoppelt. Sie überträgt ein Signal an die Steuereinrichtung 11, wenn erfasst wurde, dass sich ein Betätigungsobjekt innerhalb eines Detektionsbereichs vor der berührungsempfindlichen Oberfläche 14 befindet.

Berührt ein Nutzer mit einem Betätigungsobjekt die berührungsempfindliche Oberfläche 14 in einem bestimmten Bereich, wird ein entsprechendes Signal an die Steuereinrichtung 11 übertragen. In Verbindung mit der korrespondierenden Anzeige auf der Anzeigefläche 13 kann die Steuereinrichtung 11 auf diese Weise die Betätigung eines auf der Anzeigefläche 13 angezeigten Schaltelements erfassen. Wenn die Betätigung eines Schaltelements erfasst worden ist, kann die Steuereinrichtung 11 Steuersignale für die Steuereinheiten 4-1, 4-2 und die Lüftungseinheiten 7-1, 7-2 erzeugen und die Heizleistung der Heizeinrichtungen 2-1 und 2-2 sowie die über die Lüftungsöffnungen 3-1 und 3-2 aus dem Fahrzeugsitz 1 austretende Luft hinsichtlich ihrer Geschwindigkeit und Temperatur steuern.

Von der Steuereinrichtung 11 werden verschiedene Anzeigen zur Anzeige auf der Anzeigefläche 13 erzeugt. Die Anzeige umfasst dabei Graphikelemente sowie Schaltelemente für die Steuerung der Klimatisierungseinrichtungen.

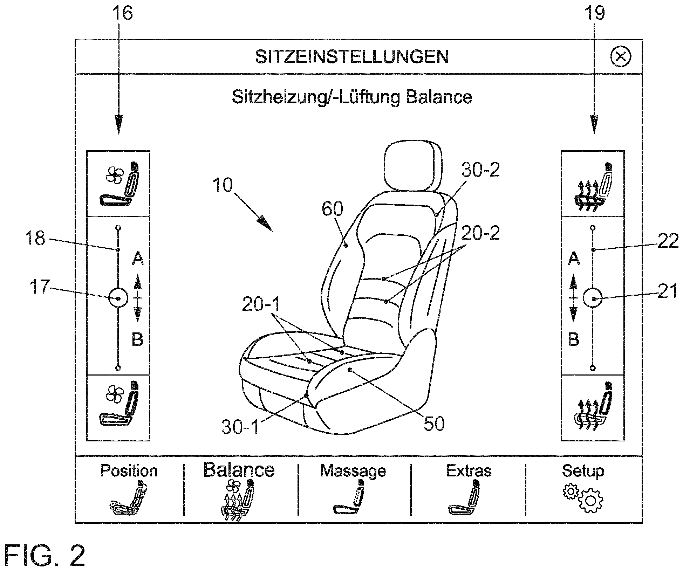

Mit Bezug zu Figur 2 wird eine Anzeige erläutert, welche mittels der Steuereinrichtung 11 erzeugbar sind und die von dem Ausführungsbeispiel des erfindungsgemäßen Verfahrens erzeugt wird:
Bei der Anzeige wird ein Graphikelement 10 des zu verstellenden Fahrzeugsitzes 1 angezeigt. Dieses Graphikelement 10 umfasst Graphikelemente 50, 60 für die Sitzfläche 5 und die Rückenfläche 6. Des Weiteren sind als symbolische Heizdrähte in dem Graphikelement 50 der Sitzfläche Graphikelemente 20-1 und in dem Graphikelement 60 der Rückenfläche Graphikelemente 20-2 dargestellt. Des Weiteren ist für das Graphikelement 50 der Sitzfläche 5 eine Umhüllung 30-1 und für das Graphikelement 60 der Rückenfläche eine Umhüllung 30-2 dargestellt. Diese Umhüllungen 30-1, 30-2 sind wie ein Flächenüberzug für das Graphikelement 50 der Sitzfläche 5 bzw. das Graphikelement 60 der Rückenfläche 6 ausgebildet.

Neben dem Graphikelement 10 für den Fahrzeugsitz 1 ist auf der linken Seite ein erstes Bedienelement 16 zur Steuerung der Sitzlüftung dargestellt und rechts neben dem Graphikelement 10 ein zweites Bedienelement 19 zur Steuerung der Sitzheizung. Das erste Bedienelement 16 ist als Schaltelement ausgebildet, welches auf der Anzeigefläche 13 angezeigt wird. Es umfasst ein Schiebeelement 17, welches auf einer Linie 18 in Richtung der Pfeile A und B bewegt werden kann. Hierfür berührt der Nutzer mit einem Betätigungsobjekt wie seiner Fingerspitze die berührungsempfindliche Oberfläche 14 bei dem Schiebeelement 17 und bewegt dann das Betätigungsobjekt auf der berührungsempfindlichen Oberfläche 14 in Richtung des Pfeils A oder in Richtung des Pfeils B.

Gleichermaßen ist das zweite Bedienelement 19 als auf der Anzeigefläche 13 angezeigtes Schaltelement ausgebildet, das ein Schiebeelement 21 umfasst, welches auf der Linie 22 in Richtung der Pfeile A bzw. B bewegt werden kann.

Befindet sich das Schiebeelement 17 bzw. 21 in der Mitte, wie es in Figur 2 dargestellt ist, befindet es sich in einer Nullstellung.

Wenn sich kein Betätigungsobjekt im Detektionsbereich der Annäherungserfassungseinrichtung 15 befindet, werden alle Graphikelemente als nicht betätigbare Anzeigeelemente dargestellt. Wenn jedoch von der Annäherungserfassungseinrichtung 15 erfasst worden ist, dass sich ein Betätigungsobjekt im Detektionsbereich befindet, werden die Anzeigeelemente in Schaltelemente umgewandelt, welche der Nutzer durch Berührung betätigen kann. Die Umwandlung von einem Anzeigeelement in ein Schaltelement wird dadurch visualisiert, dass das entsprechende Schaltelement heller dargestellt wird. Alternativ oder zusätzlich wird eine Umrisslinie um das entsprechende Schaltelement dargestellt. Wenn sich der Nutzer beispielsweise mit seiner Fingerspitze der berührungsempfindlichen Oberfläche 14 annähert, erfolgt somit beim Eintritt seiner Fingerspitze in den Detektionsbereich eine Konversion verschiedener Anzeigeelemente in Schaltelemente, so dass der Nutzer schnell erkennen kann, welche Betätigungsmöglichkeiten er hat.

Im Folgenden wird ein Ausführungsbeispiel des erfindungsgemäßen Verfahrens erläutert, welches von dem vorstehend beschriebenen Ausführungsbeispiel der erfindungsgemäßen Vorrichtung ausgeführt werden kann:
Die Sitzheizung bzw. die Sitzlüftung wird auf an sich bekannte Art und Weise über eine weitere Klimatisierungseinrichtung für den Fahrzeugsitz eingestellt. Bei dieser weiteren Klimatisierungseinrichtung wird auch ein Maximalwert für die Leistung der Sitzheizung und die Leistung der Sitzlüftung festgelegt. Mittels des erfindungsgemäßen Verfahrens ist es möglich, die Verteilung für die Sitzheizung bzw. die Sitzlüftung in den zwei separaten Bereichen, d. h. hierfür die Sitzfläche 5 und die Rückenfläche 6 des Fahrzeugsitzes 1 zu steuern.

Für die Steuerung wird auf der Anzeigefläche 13 die in Figur 2 gezeigte Anzeige dargestellt. In diesem Fall befinden sich die Schiebeelemente 17 und 21 für die Sitzheizung und die Sitzlüftung in einer Nullstellung. Dies bedeutet, dass die Sitzfläche 5 und die Rückenfläche 6 in gleicher Weise beheizt und belüftet werden. Der Wert der Sitzheizung wird in dem Graphikelement 10 durch die Graphikelemente 20-1, 20-2 dargestellt. Diese Graphikelemente 20-1 und 20-2 werden als glühende rote Drähte dargestellt.

Die Stärke der Sitzlüftung wird durch blaue Umhüllungen 30-1 und 30-2 des Graphikelements 50 für die Sitzfläche und des Graphikelements 60 für die Rückenfläche dargestellt.

Wenn der Nutzer die Verteilung der Sitzlüftung zwischen der Sitzfläche 5 und der Rückenfläche 6 verändern will, berührt er zum Beispiel mit seiner Fingerspitze die berührungsempfindliche Oberfläche 14 bei dem Schiebeelement 17 des ersten Bedienelements 16. Verschiebt der Nutzer nun mittels seiner Fingerspitze das Schiebeelement 17 in Richtung des Pfeils A nach oben, bleibt der Wert für die Sitzlüftung für die Rückenfläche 6 konstant. Der Wert für die Sitzlüftung der Sitzfläche 5 verringert sich hingegen. Die Steuereinrichtung 11 steuert die Lüftungseinheit 7-1 so an, dass weniger Luft durch die Lüftungsöffnungen 3-1 austritt. Gleichzeitig verändert sich das Graphikelement 10. Die Farbsättigung der Umhüllung 30-1 für das Graphikelement 50 für die Sitzfläche 5 und entsprechend die Leistung der Sitzlüftung für die Sitzfläche verringern sich je weiter das Schiebeelement 17 nach oben in Richtung des Pfeils A bewegt wird. In der obersten Stellung des Schiebeelements 17 ist die Sitzlüftung für die Sitzfläche 5 ausgeschaltet. In diesem Fall wird auch bei dem Graphikelement 10 für den Fahrzeugsitz 1 keine Umhüllung 30-1 für das Graphikelement 50 für die Sitzfläche 5 angezeigt.

Wenn der Nutzer hingegen mittels seiner Fingerspitze das Schiebeelement 17 nach unten in Richtung des Pfeils B bewegt, steuert die Steuereinrichtung 11 die Lüftungseinheit 7-1 so an, dass die Sitzlüftung konstant bleibt. Die Lüftungseinheit 7-2 wird von der Steuereinrichtung 11 hingegen so angesteuert, dass der Wert für die Sitzlüftung für die Rückenfläche umso mehr verringert wird, je weiter das Schiebeelement 17 von der Nullstellung nach unten in Richtung des Pfeils B bewegt worden ist. Gleichzeitig verändert die Steuereinrichtung 11 die Anzeige auf der Anzeigefläche 13 derart, dass bei dem Graphikelement 10 für den Fahrzeugsitz 1 die Farbsättigung der blauen Umhüllung 30-2 für das Graphikelement 60 für die Rückenfläche 6 verringert wird. In der untersten Endstellung des Schiebeelements 17 ist die Sitzlüftung für die Rückenfläche 6 ausgeschaltet. Entsprechend wird in diesem Fall auch keine Umhüllung 30-1 für das Graphikelement 60 mehr dargestellt.

Des Weiteren kann der Nutzer mittels des erfindungsgemäßen Verfahrens die Sitzheizung mittels des zweiten Bedienelements 19 steuern. Auch in diesem Fall kann das Schiebeelement 21 entsprechend betätigt werden. Bewegt der Nutzer das Schiebeelement 21 in Richtung des Pfeils A nach oben, steuert die Steuereinrichtung 11 die Steuereinheit 4-2 so an, dass die Heizleistung für die Rückenfläche 6 konstant bleibt. Die Steuereinheit 4-1 für die Sitzfläche 5 wird von der Steuereinrichtung 11 hingegen so angesteuert, dass die Heizleistung für die Sitzfläche 5 verringert wird. Gleichzeitig wird mittels der Steuereinrichtung 11 die Darstellung des Graphikelements 10 so verändert, dass die rote Farbsättigung der Graphikelemente 20-2 für die Rückenfläche 6 unverändert bleibt. Die Farbsättigung der Graphikelemente 20-1, die Heizdrähte für die Sitzfläche 5 darstellen, wird hingegen verringert. In der obersten Stellung des Schiebeelements 21 ist die Sitzheizung für die Sitzfläche 5 ausgeschaltet. Entsprechend werden die Graphikelemente 20-1 für die Heizdrähte grau und nicht mehr rot dargestellt.

Wenn umgekehrt das Schiebeelement 21 nach unten in Richtung des Pfeils B bewegt wird, wird auf entsprechende Weise die Heizleistung für die Rückenfläche 6 verringert. Die Heizleistung für die Sitzfläche 5 bleibt konstant. Entsprechend bleiben die Graphikelemente 20-1, die Heizdrähte für die Sitzfläche 5 darstellen, unverändert, wohingegen die rote Farbsättigung der Graphikelemente 20-3, die Heizdrähte für die Rückenfläche 6 darstellen, umso mehr verringert wird, je weiter das Schiebeelement 21 nach unten geschoben wird, bis die Graphikelemente 20-1 in der untersten Stellung des Schiebeelements 21 grau erscheinen.

### Bezugszeichenliste

- 1: Fahrzeugsitz
- 2-1, 2-2: Heizeinrichtungen
- 3-1, 3-2: Lüftungsöffnungen
- 4-1, 4-2: Steuereinheiten
- 5: Sitzfläche
- 6: Rückenfläche
- 7-1, 7-2: Lüftungseinheiten
- 10: Graphikelement
- 11: Steuereinrichtung
- 12: Anzeigevorrichtung
- 13: Anzeigefläche
- 14: berührungsempfindliche Oberfläche
- 15: Annäherungserfassungseinrichtung
- 16: erstes Bedienelement
- 17: Schiebeelement
- 18: Linie
- 19: zweites Bedienelement
- 20-1, 20-2: Graphikelemente
- 21: Schiebeelement
- 22: Linie
- 30-1, 30-2: dargestellte Umhüllung
- 50: Graphikelement
- 60: Graphikelement

## Patentansprüche

1. Verfahren zum Steuern der Klimatisierung eines Fahrzeugsitzes (1), bei dem:
ein Wert eines Klimatisierungsparameters mittels eines Bedienelements (16) eingestellt wird, welches von einer Nullstellung in zwei entgegengesetzte Richtungen (A, B) bewegbar ist,
wobei der Klimatisierungsparameter die Verteilung einer Klimatisierungsfunktion in separaten Bereichen entlang einer durch die Geometrie des Fahrzeugsitzes (1) ausgezeichneten ersten Richtung steuert,
wobei in der Nullstellung des Bedienelements eine Gleichverteilung der Klimatisierungsfunktion in den Bereichen erzeugt wird,
bei einem Bewegen des Bedienelements (16) in einer zweiten Richtung (A) der Wert des Klimatisierungsparameters für zumindest einen ersten Bereich konstant bleibt und für zumindest für einen zweiten Bereich verringert wird und
bei einem Bewegen des Bedienelements (16) in einer dritten, zur zweiten Richtung (A) entgegengesetzten Richtung (B) der Wert des Klimatisierungsparameters für zumindest den zweiten Bereich konstant bleibt und für zumindest den ersten Bereich verringert wird.

2. Verfahren nach Anspruch 1, **dadurch gekennzeichnet, dass** der Wert des Klimatisierungsparameters für den zweiten Bereich umso mehr verringert wird, desto größer der Abstand des Bedienelements (16) von der Nullstellung in der zweiten Richtung (A) ist.

3. Verfahren nach Anspruch 1 oder 2, **dadurch gekennzeichnet, dass** der Wert des Klimatisierungsparameters für den ersten Bereich umso mehr verringert wird, desto größer der Abstand des Bedienelements (16) von der Nullstellung in der dritten Richtung (B) ist.

4. Verfahren nach einem der vorhergehenden Ansprüche, **dadurch gekennzeichnet, dass** das Bedienelement (16) ein Schiebeelement (17) umfasst.

5. Verfahren nach Anspruch 4, **dadurch gekennzeichnet, dass** das Schiebeelement (17) ein Schaltelement ist, welches auf einer Anzeigefläche (13) angezeigt wird.

6. Verfahren nach Anspruch 5, **dadurch gekennzeichnet, dass** ein Grafikelement (10) des zu klimatisierenden Fahrzeugsitzes (1) auf der Anzeigefläche (13) angezeigt wird und dass das Schaltelement so auf der Anzeigefläche (13) angeordnet ist, dass ein Verschieben des von dem Schaltelement dargestellten Schiebeelements (17) in die zweite Richtung (A) eine Zuordnung zu der von dem Grafikelement (10) dargestellten Rückenfläche (6) des Fahrzeugsitzes (1) darstellt, und ein Verschieben des von dem Schaltelement dargestellten Schiebeelements (17) in die dritte Richtung (B) eine Zuordnung zu der von dem Grafikelement (10) dargestellten Sitzfläche (5) des Fahrzeugsitzes (1) darstellt.

7. Verfahren nach einem der vorhergehenden Ansprüche, **dadurch gekennzeichnet, dass** der Wert eines weiteren Klimatisierungsparameters durch ein weiteres Bedienelement (19) gesteuert wird,
wobei der weitere Klimatisierungsparameter die Verteilung einer weiteren Klimatisierungsfunktion in den separaten Bereichen entlang der ersten Richtung steuert, wobei in einer Nullstellung des weiteren Bedienelements (19) eine Gleichverteilung der weiteren Klimatisierungsfunktion in den Bereichen erzeugt wird,
bei einem Bewegen des weiteren Bedienelements (19) in der zweiten Richtung (A) der Wert des weiteren Klimatisierungsparameters für zumindest den ersten Bereich konstant bleibt und für zumindest für den zweiten Bereich verringert wird und
bei einem Bewegen des weiteren Bedienelements (19) in der dritten Richtung (B) der Wert des weiteren Klimatisierungsparameters für zumindest den zweiten Bereich konstant bleibt und für zumindest den ersten Bereich verringert wird.

8. Verfahren nach einem der vorhergehenden Ansprüche, **dadurch gekennzeichnet dass** der Wert des Klimatisierungsparameters und/oder des weiteren Klimatisierungsparameters für die Bereiche mittels des Grafikelements (10) des zu klimatisierenden Sitzes (1) dargestellt wird.

9. Verfahren nach einem der vorhergehenden Ansprüche, **dadurch gekennzeichnet, dass** der Klimatisierungsparameter eine Sitzlüftung ist, mittels welcher verschiedene Bereiche des Fahrzeugsitzes (1) belüftet werden.

10. Verfahren nach Anspruch 9, **dadurch gekennzeichnet, dass** der Wert der Sitzlüftung von dem Grafikelement (10) durch eine Umhüllung (30-1, 30-2) bei dem Graphikelement (10) des dargestellten Fahrzeugsitzes (1) wiedergegeben wird.

11. Verfahren nach einem der Ansprüche 7 bis 10, **dadurch gekennzeichnet, dass** der weitere Klimatisierungsparameter eine Sitzheizung ist, mittels welcher verschiedene Bereiche des Fahrzeugsitzes (1) erwärmt werden.

12. Verfahren nach Anspruch 11, **dadurch gekennzeichnet, dass** der Wert der Sitzheizung von dem Grafikelement (10) durch Heizdrähte in dem von dem Graphikelement (10) dargestellten Fahrzeugsitz (1) wiedergegeben wird.

13. Vorrichtung zum Steuern der Klimatisierung eines Fahrzeugsitzes (1) mit
einer Klimatisierungseinrichtung, mit der ein Wert eines Klimatisierungsparameters einstellbar ist, wobei der Klimatisierungsparameter die Verteilung einer Klimatisierungsfunktion in separaten Bereichen entlang einer durch die Geometrie des Fahrzeugsitzes (1) ausgezeichneten ersten Richtung steuert,
ein Bedienelement (16), welches von einer Nullstellung in zwei entgegengesetzte Richtungen (A, B) bewegbar ist,
einer Steuereinrichtung (11), die mit der Klimatisierungseinrichtung und dem Bedienelement (16) gekoppelt ist und die so eingerichtet ist, dass in der Nullstellung des Bedienelements (16) eine Gleichverteilung der Klimatisierungsfunktion in den Bereichen erzeugt wird, bei einem Bewegen des Bedienelements (16) in einer zweiten Richtung (A) der Wert des Klimatisierungsparameters für zumindest einen ersten Bereich konstant bleibt und für zumindest für einen zweiten Bereich verringert wird und bei einem Bewegen des Bedienelements (16) in einer dritten, zur zweiten Richtung (A) entgegengesetzten Richtung (B) der Wert des Klimatisierungsparameters für zumindest den zweiten Bereich konstant bleibt und für zumindest den ersten Bereich verringert wird.

14. Vorrichtung nach Anspruch 13, **dadurch gekennzeichnet dass** sich der von der Klimatisierungseinrichtung klimatisierte erste Bereich innerhalb einer Rückenfläche (6) des Fahrzeugsitzes (1) und der von der Klimatisierungseinrichtung klimatisierte zweite Bereich innerhalb einer Sitzfläche (5) des Fahrzeugsitzes (1) befindet.

15. Vorrichtung nach Anspruch 13 oder 14, **dadurch gekennzeichnet, dass** die Klimatisierungseinrichtung eine Sitzheizung und/oder eine Sitzlüftung ist.

## Claims

1. Method for controlling the air-conditioning of a vehicle seat (1), in which:
a value of an air-conditioning parameter is set by means of an operating element (16) which is able to be moved from a zero position in two opposite directions (A, B),
wherein the air-conditioning parameter controls the distribution of an air-conditioning function in separate regions along a first direction distinguished by the geometry of the vehicle seat (1),
wherein an equal distribution of the air-conditioning function in the regions is produced in the zero position of the operating element,
the value of the air-conditioning parameter remains constant for at least one first region, and is reduced for at least one second region, when the operating element (16) is moved in a second direction (A), and
the value of the air-conditioning parameter remains constant for at least the second region, and is reduced for at least the first region, when the operating element (16) is moved in a third direction (B), which is opposite the second direction (A).

2. Method according to Claim 1, **characterized in that** the value of the air-conditioning parameter for the second region is reduced to a greater extent the larger the spacing of the operating element (16) from the zero position in the second direction (A) is.

3. Method according to Claim 1 or 2, **characterized in that** the value of the air-conditioning parameter for the first region is reduced to a greater extent the larger the spacing of the operating element (16) from the zero position in the third direction (B) is.

4. Method according to one of the preceding claims, **characterized in that** the operating element (16) comprises a slide element (17).

5. Method according to Claim 4, **characterized in that** the slide element (17) is a switching element which is displayed on a display surface (13).

6. Method according to Claim 5, **characterized in that** a graphical element (10) of the vehicle seat (1) to be air-conditioned is displayed on the display surface (13), and **in that** the switching element is arranged on the display surface (13) such that a displacement in the second direction (A) of the slide element (17) represented by the switching element constitutes an assignment to the back surface (6), represented by the graphical element (10), of the vehicle seat (1), and a displacement in the third direction (B) of the slide element (17) represented by the switching element constitutes an assignment to the seat surface (5), represented by the graphical element (10), of the vehicle seat (1).

7. Method according to one of the preceding claims, **characterized in that** the value of a further air-conditioning parameter is controlled by way of a further operating element (19),
wherein the further air-conditioning parameter controls the distribution of a further air-conditioning function in the separate regions along the first direction,
wherein an equal distribution of the further air-conditioning function in the regions is produced in a zero position of the further operating element (19),
the value of the further air-conditioning parameter remains constant for at least the first region, and is reduced for at least the second region, when the further operating element (19) is moved in the second direction (A), and
the value of the further air-conditioning parameter remains constant for at least the second region, and is reduced for at least the first region, when the further operating element (19) is moved in the third direction (B).

8. Method according to one of the preceding claims, **characterized in that** the value of the air-conditioning parameter and/or the further air-conditioning parameter for the regions is represented by means of the graphical element (10) of the seat (1) to be air-conditioned.

9. Method according to one of the preceding claims, **characterized in that** the air-conditioning parameter is a parameter for a seat ventilation means by means of which different regions of the vehicle seat (1) are ventilated.

10. Method according to Claim 9, **characterized in that** the value for the seat ventilation means is represented by the graphical element (10) by way of a covering (30-1, 30-2) in the graphical element (10) of the illustrated vehicle seat (1).

11. Method according to one of Claims 7 to 10, **characterized in that** the further air-conditioning parameter is a parameter for a seat heating means by means of which different regions of the vehicle seat (1) are heated.

12. Method according to Claim 11, **characterized in that** the value for the seat heating means is represented by the graphical element (10) by way of heating wires in the vehicle seat (1) represented by the graphical element (10).

13. Device for controlling the air-conditioning of a vehicle seat (1), having
an air-conditioning device by way of which a value of an air-conditioning parameter is able to be set, wherein the air-conditioning parameter controls the distribution of an air-conditioning function in separate regions along a first direction distinguished by the geometry of the vehicle seat (1),
an operating element (16) which is able to be moved from a zero position in two opposite directions (A, B),
a control device (11) which is coupled to the air-conditioning device and the operating element (16) and is configured such that an equal distribution of the air-conditioning function in the regions is produced in the zero position of the operating element (16), the value of the air-conditioning parameter remains constant for at least one first region, and is reduced for at least one second region, when the operating element (16) is moved in a second direction (A), and the value of the air-conditioning parameter remains constant for at least the second region, and is reduced for at least the first region, when the operating element (16) is moved in a third direction (B), which is opposite the second direction (A).

14. Device according to Claim 13, **characterized in that** the first region air-conditioned by the air-conditioning device is situated within a back surface (6) of the vehicle seat (1), and the second region air-conditioned by the air-conditioning device is situated within a seat surface (5) of the vehicle seat (1).

15. Device according to Claim 13 or 14, **characterized in that** the air-conditioning device is a seat heating means and/or a seat ventilation means.

## Revendications

1. Procédé de contrôle de la climatisation d'un siège de véhicule (1) dans lequel :
une valeur d'un paramètre de climatisation est définie au moyen d'un élément de commande (16) qui peut être déplacé d'une position zéro dans deux directions opposées (A, B),
dans lequel le paramètre de climatisation contrôle la répartition d'une fonction de climatisation dans des zones séparées le long d'une première direction, **caractérisées par** la géométrie du siège de véhicule (1),
dans la position zéro de l'élément de commande, une répartition égale de la fonction de climatisation est générée dans les zones,
lorsque l'élément de commande (16) est déplacé dans une seconde direction (A), la valeur du paramètre de commande de climatisation reste constante sur au moins une première zone et est réduite sur au moins une seconde zone, et
lorsque l'élément de commande (16) est déplacé dans une troisième direction (B), opposée à la seconde direction (A), la valeur du paramètre de commande de climatisation reste constante sur au moins la seconde zone et est réduite sur au moins la première zone.

2. Procédé selon la revendication 1, **caractérisé en ce que** plus la distance de l'élément de commande (16) par rapport à la position zéro dans la seconde direction (A) est grande, plus la valeur du paramètre de climatisation correspondant à la seconde zone est réduite.

3. Procédé selon la revendication 1 ou 2, **caractérisé en ce que** plus la distance de l'élément de commande (16) par rapport à la position zéro dans la troisième direction (B) est grande, plus la valeur du paramètre de climatisation correspondant à la première zone est réduite.

4. Procédé selon l'une des revendications précédentes, **caractérisé en ce que** l'élément de commande (16) comprend un élément coulissant (17).

5. Procédé selon la revendication 4, **caractérisé en ce que** l'élément coulissant (17) est un élément de commutation qui est affiché sur une surface d'affichage (13) .

6. Procédé selon la revendication 5, **caractérisé en ce qu'**un élément graphique (10) du siège du véhicule à climatiser (1) est affiché sur la surface d'affichage (13) et **en ce que** l'élément de commande est disposé sur la surface d'affichage (13), **en ce qu'**un déplacement de l'élément coulissant (17) représenté par l'élément de commutation dans la seconde direction (A) représente une configuration où la surface du dossier (6) du siège de véhicule (1) est représentée par l'élément graphique (10), et **en ce qu'**un déplacement de l'élément coulissant (17) représenté par l'élément de commutation dans la troisième direction (B) représente une configuration où la surface de l'assise (5) du siège de véhicule (1) est représentée par l'élément graphique (10) .

7. Procédé selon l'une des revendications précédentes, **caractérisé en ce que** la valeur d'un autre paramètre de climatisation est contrôlée par un autre élément de commande (19),
dans lequel le paramètre de climatisation supplémentaire contrôle la distribution d'une autre fonction de climatisation dans les zones séparées le long de la première direction,
dans lequel dans la position zéro de l'autre élément de commande (19), une répartition égale de la fonction de climatisation est créée dans les zones,
lorsque l'autre élément de commande (19) est déplacé dans la seconde direction (A), la valeur du paramètre de commande de climatisation supplémentaire reste constante sur au moins la première zone et est réduite sur au moins la seconde zone, et
lorsque l'autre élément de commande (19) est déplacé dans la troisième direction (B), la valeur du paramètre de commande de climatisation supplémentaire reste constante sur au moins la seconde zone et est réduite sur au moins la première zone.

8. Procédé selon l'une des revendications précédentes, **caractérisé en ce que** la valeur du paramètre de climatisation et/ou du paramètre de climatisation supplémentaire pour les différentes zones est représentée au moyen de l'élément graphique (10) du siège à climatiser (1).

9. Procédé selon l'une des revendications précédentes, **caractérisé en ce que** le paramètre de climatisation est une ventilation du siège au moyen de laquelle différentes zones du siège de véhicule (1) sont ventilées.

10. Procédé selon la revendication 9, **caractérisé en ce que** la valeur de la ventilation du siège de l'élément graphique (10) est reproduite par une enveloppe (30-1, 30-2) sur l'élément graphique (10) du siège de véhicule représenté (1).

11. Procédé selon l'une des revendications 7 à 10, **caractérisé en ce que** le paramètre de climatisation supplémentaire est un chauffage du siège au moyen duquel différentes zones du siège de véhicule (1) sont chauffées.

12. Procédé selon la revendication 11, **caractérisé en ce que** la valeur du chauffage du siège est reproduite sur l'élément graphique (10) par des fils de chauffage représentés sur l'élément graphique (10) du siège de véhicule représenté (1).

13. Appareil pour commander la climatisation d'un siège de véhicule (1) ayant un dispositif de climatisation avec lequel une valeur d'un paramètre de climatisation est réglable, le paramètre de climatisation commandant la répartition d'une fonction de climatisation dans des zones distinctes suivant une première direction **caractérisée par** la géométrie du siège de véhicule (1),
un élément de commande (16) qui peut être déplacé d'une position zéro dans deux directions opposées (A, B),
un dispositif de commande (11) couplé au dispositif de climatisation et à l'élément de commande (16) qui est configuré de telle sorte que, dans la position zéro de l'élément de commande (16), la fonction de climatisation soit répartie de manière égale entre les zones dans une seconde direction (A), la valeur du paramètre de climatisation reste constante pour au moins une première zone et est réduite pour au moins une seconde zone et lorsque l'élément de commande (16) est déplacé dans une troisième direction (B) opposée à la seconde direction (A), la valeur du paramètre de climatisation reste constante pour au moins la seconde zone et est réduite pour au moins la première zone.

14. Dispositif selon la revendication 13, **caractérisé en ce que** la première zone conditionnée par le dispositif de climatisation est située à l'intérieur d'un dossier (6) du siège du véhicule (1) alors que la seconde zone conditionnée par le dispositif de climatisation est située à l'intérieur d'une assise (5) du siège du véhicule (1).

15. Dispositif selon la revendication 13 ou 14, **caractérisé en ce que** le dispositif de climatisation est un chauffage de siège et/ou une ventilation de siège.
